# NEUE EUROPÄISCHE PATENTSCHRIFT

(11) **EP 0 362 326 B2**
(45) Veröffentlichungstag und Bekanntmachung des Hinweises auf die Entscheidung über den Einspruch: **25.09.1996**
(45) Hinweis auf die Patenterteilung: 09.06.1993
(21) Anmeldenummer: 89903077.9
(22) Anmeldetag: 21.03.1989
(51) Int. Cl.: B21K 23/02, B21L 9/02, B62D 55/32, B62D 55/20

(54) **RAUPENFAHRZEUG**
TRACKLAYING VEHICLE
VEHICULE A CHENILLES

(30) Priorität: 23.03.1988 CH 1104/88
(43) Veröffentlichungstag der Anmeldung: 11.04.1990
(73) Patentinhaber: ZEPF, Hans-Rudolf, CH-8803 Rüschlikon (CH)
(72) Erfinder: ZEPF, Hans-Rudolf, CH-8803 Rüschlikon (CH)
(74) Vertreter: Weiss, Peter, Dr. rer.nat.
(86) Internationale Anmeldenummer: CH8900057
(87) Internationale Veröffentlichungsnummer: WO8909105

(56) Entgegenhaltungen:
- GB-A- 373 770
- GB-A- 1 188 371
- US-A- 4 175 797
- TRACK DATA BOOK (TACOM - U.S.Army Tank Automotive Command, Warren, Michigan 48090, pages 62,80,86,94 (1971)
- Prospektblätter T91E3 der Firma Erwin Backhaus
- Fachbuch "Gleisketten gepanzerter Fahrzeuge", Verlag Schabak, 1985, Seite 52

## Beschreibung

Die Erfindung liegt auf dem Gebiet der Fahrzeugtechnik und betrifft eine Raupenkette für Raupenfahrzeuge nach dem Oberbegriff des Patentanspruches 1.

Beim Baumaschineneinsatz steht grundsätzlich die Forderung nach weigehend uneingeschränkter Funktionssicherheit und damit nach ständiger Verfügbarkeit der Geräte im Vordergrund. Das hängt mit der Vernetzung aller mechanisierten Teilprozesse auf der Baustelle zusammen: Selbst der kürzeste unerwartete Ausfall eines Produktionsmittels führt in der Regel zu weiteren Maschinenstillständen, zu Wartezeiten für das Personal, zu ventuellen aufwendigen Ersatzlösungen und summiert sich meistens auch durch Verzögerungen im Baufortschritt.

Diese Feststellung leitet einen Artikel in der "bd baumaschinendienst" Heft 2, Feb. 1988 ein, der sich mit modernen Kettenkonstruktionen befasst. Erweiternd ist dazu zu sagen, dass dies auch auf die Versatilität einer Maschine zutreffen kann, nämlich dann, wenn ein unerwarteter Umstand die Maschine wohl nicht gerade stillstehen lässt, aber sie untauglich für den Einsatz unter den gegebenen Umständen sein lässt. Aus US-A 4175797 ist ein aus Basis- und Sohlenteil bestehendes einstückiges Raupenglied bekannt, bei dem sohlenseitig in dem Sohlenmittelteil liegende Rippen zur Verbesserung der Bodenhaftung vorgesehen sind. Beim Abrollen auf eine feste Bodenpartie treten aber Schläge auf, die Lärm und Verschleiss bewirken.

Eine Raupenkette entsprechend dem Oberbegriff von Anspruch 1 ist aus der GB-A 1 188 371 bekannt.

Aufgabe der Erfindung ist es jedoch, eine Raupenkette dieser Art so auszugestalten, dass sie bei jeder Bodenart schlagfrei abrollt und greift und der beim Abrollen entstehende Verschleiss der Profilrippenenden minimiert wird.

Die Aufgabe wird gelöst durch eine Raupenkette, wie sie im Patentanspruch 1 definiert ist.

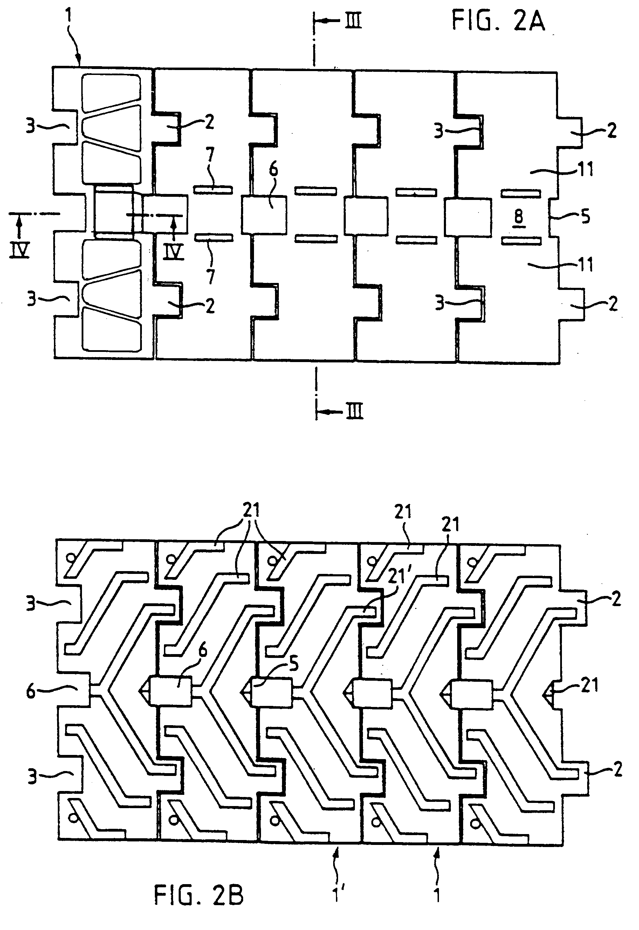

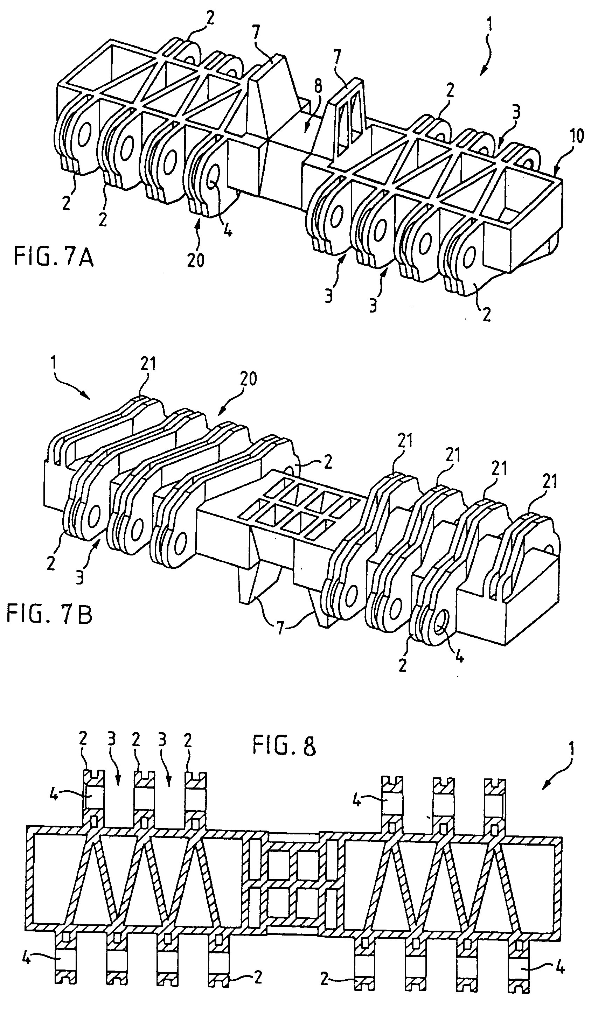

Anhand der nachfolgend aufgeführten Figuren werden nun einige bevorzugte Ausführungsformen der Erfindung eingehend diskutiert.
Fig. 1
   zeigt in räumlicher Darstellung eine Raupenplatte in zweigeteilter Form, in Wirklichkeit ist sie einstückig, in einem schematisch dargestellten Werkzeug, das in Wirklichkeit zweiteilig ist.
Fig. 2A
   zeigt ein Stück Raupenband von der Antriebsfläche her betrachtet.
Fig. 2B
   zeigt ein Stück Raupenband von der Profilseite her betrachtet.
Fig. 3
   zeigt eine Raupenplatte im Längsschnitt III-III gemäss Figur 2 und
Fig. 4
   zeigt dieselbe Raupenplatte im Querschnitt IV-IV gemäss Figur 2.
Fig. 5
   zeigt in schematischer Darstellung einen Umfangsteil des Raupenantriebsrades im Eingriff mit der Raupenkette.
Fig. 6
   zeigt in schematischer Darstellung einen Umfangsteil des Raupenantriebs, bei welcher der Eingriff der profilierten Sohle von der Seite sichtbar ist. Ueber die Oesen und Oesenscharten greift das Profil über die Plattenfugen über (siehe auch Figur 2B)
Fig. 7A und 7B
   zeigen ein Raupenkettenglied aus Kunststoff, von der Rollenlaufseite und von der Standfläche gesehen.
Fig. 8
   zeigt den Querschnitt durch ein Kettenglied gemäss den Figuren 7.
Fig. 9A und 9B
   zeigen eine Ausgestaltung der Rollenführung für Kettenglieder aus Metall und aus Kunststoff mit Innen- und Aussenlaufflächen für die Laufrollen des Fahrwerks.
Fig. 10
   zeigt an einem Kettenstück (hier aus Kunststoffkettengliedern bestehend) die Aussenlaufflächen und die Innenlauffläche, für Aussen-Laufrollen oder Innen-Laufrollen.

Da die Antriebsmechanismen für Stahl- und Gummiraupen grundsätzlich verschieden sind, war bis anhin ein Umrüsten von einem Typ auf den anderen, wenn überhaupt möglich, dann nur mit einem in der Regel uninteressant hohen Umbauaufwand möglich. Deswegen musste man sich jeweils entscheiden, entweder Gummi- oder Stahlraupenfahrzeuge oder beides zusammen, was natürlich jeweils eine Kosten- oder eine Einsatzbeschränkungsfrage ist.

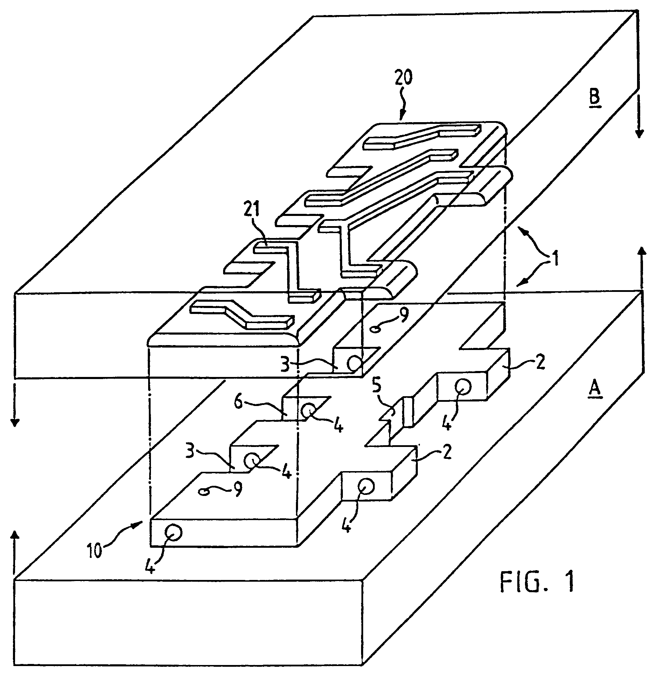

Die Idee, die zur Erfindung führte, basiert auf der Annahme, dass die Uebertragung der vorteilhaften Eigenschaften der Gummiraupenketten auf eine entsprechende Konstruktion in Metall (Stahl) möglich sein sollte, obschon bis anhin von keiner Seite diese Art von Uebertragung, trotz dem allseits bekannten, oben erwähnten Engpass, bekannt wurde. Es zeigte sich aber schon bei den ersten Versuchen, dass eine direkte Uebertragung nicht möglich war, die Problematik lag eindeutig bei der Konstruktionstechnik für zwei verschiedene Materialien, die sich nicht ohne weiteres die Vorgehensweisen der anderen Materialien aufzwingen liessen. Eine möglichst direkte Nachbildung eines Gummikettengliedes in metallischer Form erbrachte keine brauchbare Lösung. Es musste für die Stahlplattenraupen eine neue Plattenform gefunden werden, nebst dem wurde aber die angestrebte Versatilität bei möglichst niedrigem Herstellungsaufwand und Materialaufwand nicht ausser acht gelassen. Erkannt wurde auf der Suche nach der endgültigen Lösung, dass eine Art Feingliedrigkeit der Kette Vorteile brachte. Dagegen sprach natürlich, wie oben schon diskutiert, dass zur Erreichung eines gewissen Robustheitsgrades die Abmessungen eines Ketten- bzw. Raupengliedes gewisse Mindestmasse der Dimensionierung gegeben sein müssen. **Figur 1** zeigt das Prinzip der formmässigen Lösung einer Raupenplatte, die bspw. in einer Sohlendimensionierung von 23 cm mal 7,2 cm die gewünschte Feingliedrigkeit und die gewünschte Verbindungseigenschaft der Kettenglieder zu einer Raupenkette bei ausreichender Stabilität brachte. Die angestrebte Versatilität konnte bestens realisiert werden, wobei der Herstellungsaufwand, verglichen mit Gummiraupenketten oder den herkömmlichen Stahlraupenketten geringer ist. Die **Figuren 2A und 2B** zeigen fünf solcher Raupenplatten, die zu einem Stück Raupenkette zusammenmontiert sind.

In einer Weiterbildung gemäss diesem Prinzip, zeigte sich, dass solche Raupenketten zukunftskonform auch aus organischen Werkstoffen, also aus zähen Kunststoffen hergestellt werden können, was weiter unten noch separat diskutiert wird. Damit kann durch die Elastizität eines organischen Werkstoffes, der Metallen nähere Charakteristikas aufweisen soll als Gummi, topographischen Gegebenheiten (Boden, Unterlage) besser Rechnung getragen werden, als dies wiederum bei Metall möglich ist (Anwendung von Kriterien der Reifentechnik).

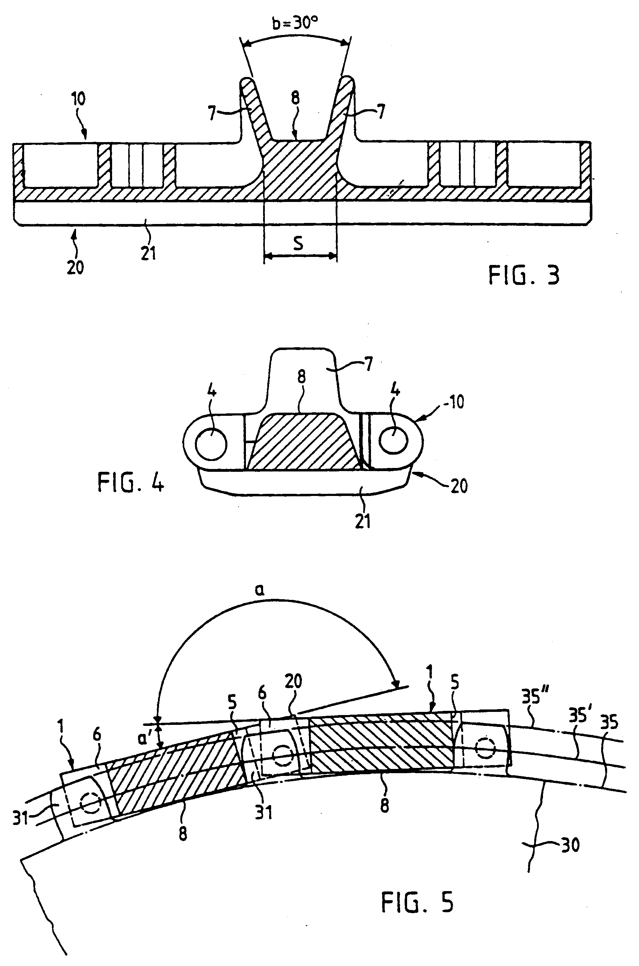

Ausser den in **Figur 1** gezeigten Aufnahmeösen 2 zur Verbindung der Kettenglieder 1 sind ausserdem Aussparungen 5,6 für den Form- bzw. Kraftschluss des Antriebsrades sichtbar. Die beiden Schnitte in den Figuren 3 und 4 zeigen die Seitenführung (Leitnasen) 7 der Raupenplatte, die verhindern, dass die auf dem Gleis, also den abgelegten Raupenplatten laufenden Rollenteile des Unterwagens seitlich ausweichen können (weiter unten wird noch auf Innen- und Aussenlaufflächen für die Gleise eingegangen). Das gezahnte Antriebsrad 30 (Fig.5) mit den Zähnen 31 für den Kraftschluss mit der Kette, greift in die durch die Aussparung in der Kette gebildete Eingriffslücke ein, wodurch diese Art von Kettenantrieb durch den automatischen Ausstoss des in die Eingriffslücke eingewalzten Drecks durch den eingreifenden Treibzahn eine selbstreinigende Wirkung aufweist. Die auf diese Weise modular aufgebaute Raupenkette kann in ihrer Länge variabel ausgeliefert werden. Je nach Länge des Unterwagens werden mehr oder weniger Raupenplatten benötigt. Eine Grundlänge der Raupenkette kann schon montiert ausgeliefert werden, die Zusatzlänge legt man in einzelnen Raupenplatten bei. So einfach wie sich die Raupenkette gemäss Erfindung aufmontieren lässt, so einfach lassen sich auch die mitgelieferten zusätzliche Raupenplatten ansetzen. Dies als kurze einführende Uebersicht.

In **Figur 1** ist andeutungsweise ein zweiteiliges Werkzeug A,B als Giess- oder Schmiedeform zur Herstellung einer Raupenplatte 1 gezeigt.Es besteht aus einem Unterteil A, in welchem der Grundteil oder Basisteil 10 geformt wird, und aus einem Oberteil B, in welchem der Sohlenteil 20 geformt wird. Die Zweiteilung des Werkzeuges, welche vorzugsweise einteilige Raupenplatten (mit oder ohne Sohle) herstellt, hat den Vorteil, dass einsatzfertige Raupenplatten mit beliebigen Sohlenprofilen (zum Teil aus verschiedenen Materialien) hergestellt werden können.

Bis anhin gab es an den Laufflächen von Stahlraupen keine Profile, stets sind sie entweder glatt oder mit Stegen versehen. Das hier gezeigte Vorgehen erlaubt aber trotz der Möglichkeit, beliebige Profile aufzusetzen oder anzuformen ausserdem Raupenplatten statt mit Profilen mit Stegen zu versehen. Zu diesem Zweck wird lediglich der Werkzeugoberteil B durch einen anderen solchen ersetzt, der die gewünschten Anformungen aufweist. Figur 2B zeigt ein Beispiel eines angeformten selbstreinigenden Profils.

Die in einem solchen Werkzeug hergestellte Raupenplatte 1 weist am Basisteil 10 mindestens zwei Aufnahmeösen 2 auf der einen und eine entsprechende Anzahl Oesenscharten 3 auf der andern Seite auf. Achsbohrungen 4 erlauben das einfache Zusammenfügen einzelner Raupenplatten mittels Achsbolzen (nicht dargestellt), welche durch die Achsbohrungen 4 gesteckt werden. Zur Sicherung der Achsbolzen sind Bohrungen zum queren Durchstecken eines Achssicherungsstiftes (nicht dargestellt) vorgesehen. Jede Raupenplatte (oder analog jede Kunststoffplatte) weist zusätzliche Einschnitte 6 auf, die im montierten Zustand eine Eingriffslücke für die Zähne eines Antriebsrades (Fig.5) bilden. Die Abwälzflächen 5 für die Zähne des Antriebsrades sind so geformt, dass möglichst nur kleine Relativbewegungen zwischen Zahn und Kette stattfinden, um den Verschleiss gering zu halten. Der Sohlenteil 20 ist so gerundet, dass die kinematischen Eigenschaften der Raupenkette und Antriebsrad, das vorteilhafterweise ein Umlenkrad ist, nicht beeinträchtigt werden (wird im Zusammenhang mit Figur 5 noch näher diskutiert).

**Figur 2A** zeigt ein Stück Raupenkette von unten her (mit Leitnasen) betrachtet, **Figur 2B** ein solches von oben her (mit Profil) betrachtet. Hier ist nun ein Teil der Raupenplatte sichtbar, der in Figur 1 verdeckt ist, nämlich die Seitenführungen 7 für Innenführung und 7' für Aussenführung, die verhindern, dass sich die Kette auf dem Fahrwerk seitwärts verschiebt. Ausserhalb der Seitenführungsreihe befinden sich beidseits davon die Laufflächen für die Leiträder; zwischen den Seitenführungsreihen befindet sich die Abrollbahn für das Antriebsrad. Mittig verläuft die Reihe der Eingriffslücken 6, welche entsprechend der gewählten Teilung des Antriebsrades beabstandet sind. Man sieht hier klar, wie praktisch lückenlos solch eine Raupenkette gestaltet werden kann. Auch bei der Umlenkung sind die Spaltöffnungen derart klein, dass grober Dreck, wie bspw. Steine und stückiges Gut nicht eindringen können. Damit ist eine der wesentlichen Belastungsformen, nebst der in der Scharnierung stattfindenden nahtlosen Ablauffläche einer Raupenkette eliminiert.

In **Figur 2B** ist deutlich die plattenübergreifende Profilgestaltung sichtbar. Das Profil ist hier ein Positivprofil, also ein solches mit Rippen 21. Eine Raupenplatte 1' und eine Raupenplatte 1 wiesen die ihnen zugehörigen Profile 21' bzw.21 auf. Nun sieht man beim Platten-Uebergang an der Stelle, wo eine Aufnahmeöse 2 in die entsprechende Oesenscharte 3 ragt, dass dort auch die Profilrippe 21' der Raupenplatte 1' in den Bereich der Profilrippen 21 auf der Raupenplatte 1 ragt.

**Figur 3** zeigt nun einen Längsschnitt entlang der Linie III-III in Figur 2. Hier sieht man eine mögliche Ausgestaltung zur Erzielung der gewünschten Steifigkeit unter Berücksichtigung eines optimalen Werkstoffeinsatzes. Die gezeigten Rippen können auch anders gelegt werden. Die Oeffnung zwischen den Seitenführungen 7 in Form von Lenknasen mit der Abrollfläche 8 für das Antriebsrad (oder auch ein Leitrad) weist einen Keilwinkel b auf, der vorzugsweise um die 30° beträgt. Mit S ist die ungefähre Schienen- oder Gleisbreite bezeichnet, auf welchem Gleis die Rollenteile des Unterwagens abrollen. Angedeutet sind wieder die beiden "Teile" Basisteil 10 und Sohlenteil 20 mit dem Profil 21.

**Figur 4** zeigt einen Querschnitt der Raupenplatte entlang der Linie IV-IV in Figur 2. Hier sieht man die seitliche Form der Seitenführung oder Lenknasen 7 und auch eine der möglichen Formen des angeformten Sohlenteils 20. Die Abrundung der Sohle ist so ausgeführt, dass beim Ablegen der Raupenplatte kein Schlagen und/oder Anheben auf/von die/der Unterlage bei ebenem Boden, bzw. kein Schürfen im Boden bei grober Unterlage stattfindet. Die beiden Schnittzeichnungen zeigen die Rippenbauweise, die bei dieser Art Raupenkette überhaupt erst möglich ist, dies im Vergleich mit den aufwendigen vielteiligen Raupenketten konventioneller Bauart. Und was für Arbeits- und Materialersparnisse dadurch möglich werden, kann man leicht abschätzen. Die hier diskutierte Raupenkette weist bezüglich Herstellung, Montage, Unterhalt und Lagerhaltung derart viele Vorteile auf, dass sie im Vergleich zu den herkömmlichen Stahlraupenketten ungleich viel besser abschneidet.

Eine mehr kinematische Betrachtungsweise ist in **Figur 5** dargestellt. Mit der Nummer 30 ist ein Antriebsrad bezeichnet, das ein Stück der Peripherie mit den (Treib-)Zähnen 31 für den Kraftschluss mit der Raupenkette I zeigt. Die Zähne tauchen in die Eingriffslücken 6 ein und übertragen so die Kraft auf die Kette. Die Flankenform ist hier willkürlich dargestellt, empfehlenswert sind steile Flanken, um einen möglichst grossen Anteil tangentialer Kräfte zu übertragen. Mit 35 ist der Innenradius der Abrollfläche 8, mit 35'' der Aussenradius der Zahnscheitel und mit 35' der Teilkreis- oder- Mittenradius bezeichnet. Auf diesem Mittenradius laufen die Zentren der Oesen bzw. Achsbolzen 4 (Scharnierverlauf der Kette), wodurch Drehmomente zwischen Kette und Antrieb eliminiert werden und Kippen, Drehen, Positionsänderungen dar Platten nicht vorkommen können. Der Scharnierpunkt ist stets auch der Kraftangriffspunkt. Auf das Antriebsrad sind zwei Raupenplatten 1 gelegt, die durch die Umlenkung entlang der Antriebsradperipherie nun zueinander geneigt sind. Der von der Ebene abweichende Winkel ist mit a und der "Arbeitswinkel" ist mit a' bezeichnet. Mit Arbeitswinkel ist folgendes gemeint: Die Raupenplatten sind lediglich mit Achsbolzen aneinandergefügt. Es ist keine Schmierung vorgesehen, es sind also trockene Kettengelenke. Dies bringt nicht nur Wartungs- sondern auch Herstellungsvorteile. Nun ist im Falle eines Trockengelenkes die Grösse des Arbeitswinkels, das ist der Drehwinkel zwischen Achsbolzen und Achslagerung, nicht unbedeutend. Je kleiner er ist, desto mehr Arbeitsbewegungen sind innerhalb einer Gelenklebensdauer möglich. Stellt man sich das Antriebsrad als n-Polygon vor, mit der Seitenlänge einer Raupenplatte vor, so ergibt sich, dass je höher n gewählt werden kann, desto kleiner der Arbeitswinkel a' wird. Und je kleiner der Arbeitswinkel, desto grösser wird der die Kettenebene beschreibende Winkel a, der im Idealfall 180° beträgt. Dies tritt dann ein, wenn die Raupenplatten sich in einem der beiden Trums, jedenfalls auf dem Gleistrum, befinden. Doch je kleiner dieser Ebenenwinkel a ist, desto mehr Ueberstand weist das Sohlenende 20 der Raupenplatte 1 auf. Figur 4 zeigt eine seitliche Abrundung des Sohlenteils, die so gewählt ist, dass das Ablegen der Raupenplatte in das Gleistrum ohne Aufschlagen erfolgt. Damit hat man die Möglichkeit, zwei sich entgegenlaufende Konstruktionsgrössen gegeneinander zu optimieren. Das n-Polygon wird so gewählt, dass n in Bezug zur Breite und Länge der Raupenplatte vorzugsweise ein Verhältnis 1:3 bis 1:4 aufweist. Bei einer Raupenkette von ungefähr 30 cm Breite ist die Seitenlänge des n-Polygons zwischen 7 bis 10 cm zu wählen. Dies ergibt bspw. bei einer Kreisteilung des Antriebsrades mit n =24 und einer Seitenlänge von 8 cm einen Radius des Antriebsrades von ca. 30 cm. Dies ist eine durchaus realistische Grösse, auch bei mittelgrossen bis kleinen Erdbaumaschinen. Bei solch einem Antriebsrad kommen auf einen Viertelumfang sechs Raupenplatten, was verglichen mit der Gliedrigkeit von herkömmlichen Stahlraupen und deren Umlenkungen sehr hoch ist.

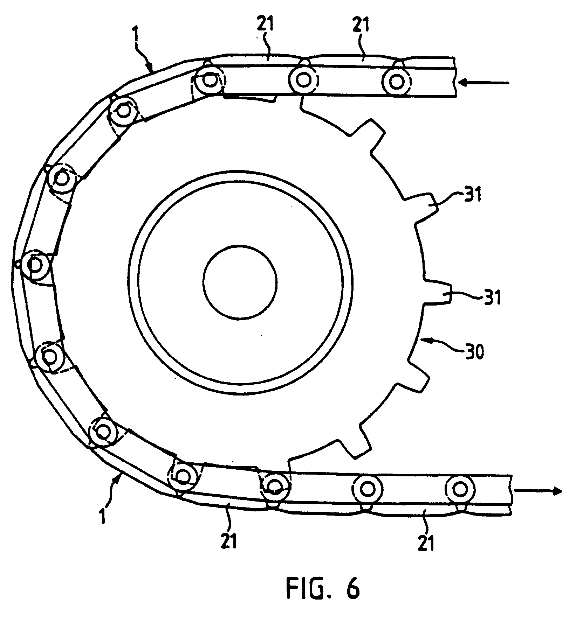

In **Figur 6** sind die Sohlen adäquat abgerundet eingezeichnet, ausserdem ist eine volle Umlenkung um 180° um das Antriebsrad 30 dargestellt.

Ein Vorteil der diskutierten Kette ist der Krafteingriff, der hier in der Kettenebene erfolgt. Beim herkömmlichen Raupenfahrwerk aus Stahl reicht der Krafteingriff nicht bis in die Kettenebene, sodass zwischen Antrieb und Raupensohle Hebelkräfte aufzufangen sind. Dies bewirkt eine Zusatzbelastung und zusätzliche Lärmigkeit beim Umlenken. Beim Absetzen der Raupenplatten auf das Gleistrum treten Schläge gegen das Fahrwerk auf, was alles zusammen den Verschleiss fördert.

Bei den sich ständig verbessernden Werkstoffen in Richtung der Festigkeit von Metall, können solche Raupenplatten auch aus einem Verbundwerkstoff auf der Basis von Kunststoffen bestehen. Solche Kunststoffraupenplatten würden dann mittels bspw. metallenen Achsbolzen zusammengefügt, wobei vorteilhafte Materialpaarungen ausgewählt werden können, die die Lebensdauer der Gelenke erhöhen. Kunststoffe haben in der Regel gute Oberflächeneigenschaften.

Ein solches aus einem zähen Kunststoff gefertigtes Kettenglied ist in den Figuren 7A und 7B in zwei Blickrichtungen dargestellt. Aus giess- bzw. spritztechnischen Gründen sind die "Rippen" für Versteifung des Kettengliedes und die Rippen für das Profil mit gleichen Wandstärken hergestellt. Um die gleiche Profilbreite herzustellen, sind hier bspw. für jeden Profilsteg 21 zwei Rippen nötig. Es handelt sich beim gezeigten Beispiel um eine noch feingliedrigere Kette mit zusätzlichen Oesen, das heisst, um eine Raupenkette mit einer dichteren Scharnierung. Doch sind natürlich auch hier die oben diskutierten Prinzipien angewandt worden. Figur 8 zeigt noch einen Querschnitt zur Darstellung der "Rippigkeit" bei Konstruktionen aus organischen Materialien, welche in Zukunft mehr und mehr metallische Werkstoffe verdrängen werden. Mit diesen drei Figuren soll die Uebertragung der Erfindung auf Kunststoffe gezeigt werden, gleichzeitig soll auch klar werden, dass das angegebene Prinzip der Konstruktion und der Herstellung nicht an ein Material gebunden ist, auch wenn hier die Vorteile eines metallischen Materials besonders hervorgehoben sind.

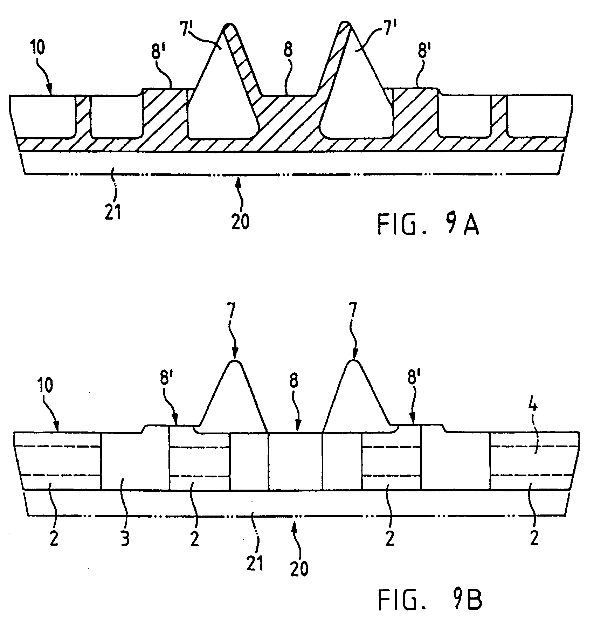

Die hier diskutierten Ketten aus Metall oder Kunststoff können für Laufrollen (und Umlenkrollen) mit einer Innen- oder mit Aussenlaufflächen ausgestaltet sein. Diese konstruktive Massnahme ist in den beiden Figuren 9A und 9B gezeigt. Dazu werden die Seitenführungen 7 gegenüber der Ausgestaltung gemäss Figur 3 symmetrisch nach aussen verbreitert und auf beiden Seiten der Führungen Rollen-Laufflächen 8' angeordnet. Die innere Rollenlauffläche 8, wie in Figur 3 sichtbar, bleibt bestehen. In Figur 9B ist die typische Nasenform gut sichtbar, ausserdem sind hier typische Masse (in mm) für Raupenkettenglieder für die Raupenkette eines Kleinbaggers angegeben. Dies sind natürlich nur beispielshafte Abmessungen, aber sie zeigen, wie "gross" beziehungsweise "klein" so ein Raupenkettenglied sein kann.

Die Massnahme, innere 8 und äussere 8' Rollenlaufflächen an der gleichen Kette zu schaffen, ermöglicht die Verwendung der Kette zusammen mit verschiedenen Laufrollentypen, nämlich Aussenlauf oder Innenlauf. Die Laufrollentypen mit Aussenlauf sind zahlenmässig am aufholen und werden wahrscheinlich die Laufrollen mit Innenlauf ablösen, weswegen hier auch eine Lösung für die zukunftsrächtigen Kunststoffketten angeboten wird, die mit Laufrollen mit Aussenlauf betrieben werden können.

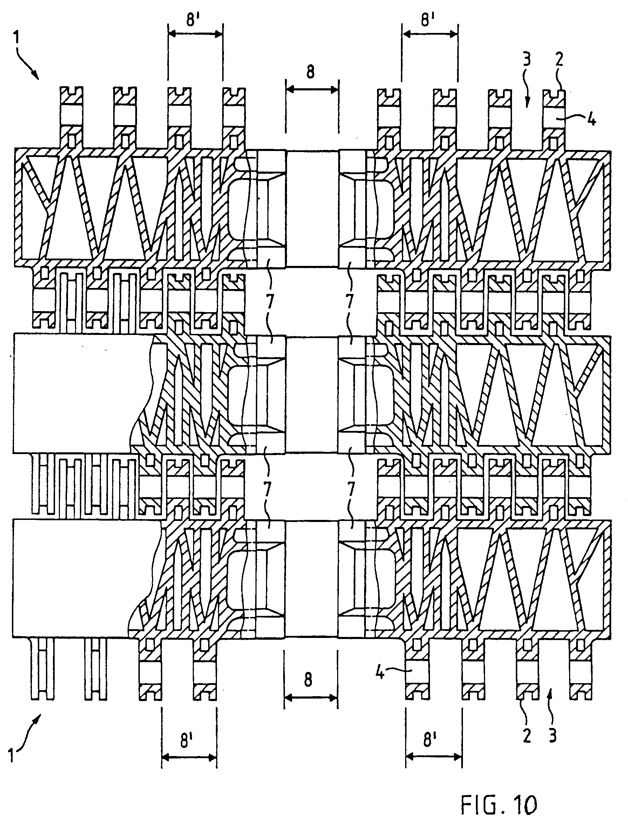

Wenn nun beim Kettentyp mit Aussenlaufflächen bei Verwendung von metallischen Werkstoffen keine speziellen Massnahmen getroffen werden müssen, so muss bei der Verwendung von organischen Werkstoffen auf der Abrollbahn eine Material-Verstärkung vorgesehen werden. Um eine die Herstellung verteuernde Kombination von verschiedenen Materialien (bspw. Kombination Metall/Kunststoff oder Kunststoff/Kunststoff) zu umgehen, wird hier vorgeschlagen, die Rippendichte im Bereich der Abrollbahnen zu vergrössern. Dies ist in Figur 10 gezeigt, in welcher ein Kettenstück von aneinandergefügten Kettengliedern zu sehen ist. Die Zusatzrippen (gleicher Stegbreite) im Bereich der Aussenlaufflächen 8' lassen, wenn die Kettenglieder zu einer Kette zusammengefügt sind, zwei Abrollbahnen erkennen (dunklere Spuren). Die Abrollbahn 8, in der Mitte (nicht hervorgehoben) bleibt bestehen. Es können also mit der gleichen Raupenkette beide Laufrollentypen verwendet werden.

Damit erfüllt die diskutierte Raupenkette alle eingangs genannten Aufgaben. Sie ist leicht montier- und demontierbar und passt auf das Fahrwerk von Erdbaufahrzeugen mit Gummiraupen, sodass diese Fahrzeuge in kurzer Zeit, mit geringem Arbeits- und Geldaufwand jederzeit umgerüstet werden können. Selbstverständlich ist auch eine Nachrüstung jederzeit möglich, sofern die Masse der metallischen Raupenplatte dem Teilkreisverhältnis des Antriebsrades der Gummiraupenkette entsprechen. Beschädigte Raupenplatten können ohne weiteres ausgetauscht werden. Die Sohle der Raupenkette kann durch Wahl des Werkzeugteiles B den jeweiligen Bedürfnissen, Wünschen und Verhältnissen angepasst werden. Die Raupenkette ist, was die Eingriffslücken betrifft selbstreinigend, in dem der in die Lücke eindringende Treibzahn den eingewalzten Dreck aus der Lücke hinausdrückt. Die Herstellung ist einfach: für Normalserien können die Raupenplatten gegossen werden, für Grösstserien werden sie vorteilhafterweise geschmiedet. Die Möglichkeit, auch selbstreinigende Profile auf die Plattensohle aufzubringen, bspw. für Maschinen, die im Erdreich (Acker) arbeiten, ohne die Herstellung grundsätzlich ändern zu müssen, bietet eine grosse Anpassungsfähigkeit der Produktion an die Bedürfnisse der Abnehmer.

Wie nun auch immer das Profil ausgestaltet wird, wenn der Uebergang von der einen zur anderen Platte in das Profil miteinbezogen ist, das heisst, dass sich das Profil über den Plattenübergang erstreckt, so ist der gewünschte nahtlose Uebergang gewährleistet und sogar noch besser gelöst als dies bei der Gummiraupe bis heute der Fall ist. Dies ergibt den angestrebten rollenden, im Umfang stattfindenden, nahtlosen Uebergang.

## Patentansprüche

1. Raupenkette für ein Raupenfahrzeug, die aus einer Anzahl Kettenglieder (1) gebildet ist, von denen jedes Kettenglied (1) an der einen Längskante mit Abstand angeordnete Aufnahmeösen (2) und an der anderen Längskante mit den Aufnahmeösen (2) fluchtende Ösenscharten (3) sowie eine Eingriffslücke (6) zur Aufnahme des Zahnes (31) eines Antriebsrades (30) des Raupenfahrzeuges und eine Seitenführung (7, 7') zur Führung an Führungsrollen des Rauperfahrzeuges aufweist, wobei die Aufnahmeösen (2) des Kettengliedes (1) in den Ösengcharten (3) eines benachbarten Kettengliedes in Bohrungen (4) gelenkig aufgenommen sind und jedes Kettenglied (1) einstückig, bestehend aus einem antriebsradseitigen Basisteil (10) und einem bodenseitigen, mit Profilrippen (21) versehenen Sohlenteil (20), ausgebildet ist, und wobei bei Aufnahme der Aufnahmeösen (2) eines Kettengliedes (1) in den Ösenscharten (3) eines benachbarten Kettengliedes (1) die Profilrippen (21) sich überlappen,
daduch gekennzeichnet,
dass die Profilrippen (21) sich über alle Aufnahmeösen (2) erstrecken und die Enden (20) der Profilrippen (21) benachbarter Kettenglieder über den Aufnahmeösen (2) in Richtung des jeweiligen Profilrippenendes abgeschrägt und abgerundet sind.

2. Raupenkette nach Anspruch 1, dadurch gekennzeichnet, dass bei der Führung der Kettenglieder (1) auf dem Antriebsrad (30) die Bohrungen (4) im wesentlichen auf dem Teilkreis (35') des Antriebsrades (30) liegen.

3. Raupenkette nach Anspruch 1, dadurch gekennzeichnet, dass das Ketttenglied (1) aus Metall besteht.

4. Raupenkette nach Anspruch 1, dadurch gekennzeichnet, dass das Kettenglied (1) aus Kunststoff bestehen.

5. Raupenkette nach Anspruch 1, dadurch gekennzeichnet, dass bei zwei. Aufnahmeösen (2) an der einen Längskante und zwei Oesenscharten (3) an der anderen Längskante des Kettengliedes (1) die Eingriffslücke (6) zwischen den Oesenscharten (3) angeordnet ist.

6. Raupenkette nach Anspruch 4, dadurch gekennzeichnet, dass das Kettenglied (1) mit inneren Verstärkungsrippen versehen ist, deren Wandstärke gleich derjenigen der Profil Rippen (21) ist.

7. Raupenkette nach Anspruch 1, dadurch gekennzeichnet, dass der Seitenführung (7,7') Innen-und Aussenlaufflächen (8,8') zugeordnet sind.

## Claims

1. Caterpillar track for a tracked vehicle formed from a number of track links (1) of which each track link (1) has spaced receiving lugs (2) on one longitudinal edge and eyelet notches (3) aligned with the receiving lugs (2) on the other longitudinal edge as well as an engagement recess (6) for receiving the tooth (31) of a driving wheel (30) of the tracked vehicle and a lateral guide (7, 7') for guidance on guide rollers of the tracked vehicle, wherein the receiving lugs (2) of the track link (1) are received in an articulated manner in the eyelet notches (3) of an adjacent track link in bores (4) and each track link (1) is designed in one piece consisting of a driving wheel side base part (10) and a floor side sole part (20) provided with profile ribs (21) and wherein when the receiving lugs (2) of a track link (1) are received in the eyelet notches (3) of an adjacent track link (1), the profile ribs (21) overlap, characterised in that the profile ribs (21) extend over the receiving lugs (2) and the ends (20) of the profile ribs (21) of adjacent chain links are bevelled and rounded in the direction of the respective profile rib end over the receiving lugs (2).

2. Caterpillar track according to claim 1, characterised in that, when the track links (1) are guided on the driving wheel (30), the bores (4) lie substantially on the pitch circle (35') of the driving wheel (30).

3. Caterpillar track according to claim 1, characterised in that the track link (1) consists of metal.

4. Caterpillar track according to claim 1, characterised in that the track link (1) consists of plastics material.

5. Caterpillar track according to claim 1, characterised in that, when there are two receiving lugs (2) on one longitudinal edge and two eyelet notches (3) on the other longitudinal edge of the track link (1), the engagement recess (6) is arranged between the eyelet notches (3).

6. Caterpillar track according to claim 4, characterised in that the track link (1) is provided with internal reinforcing ribs of which the wall thickness is equal to that of the profile ribs (21).

7. Caterpillar track according to claim 1, characterised in that the lateral guide (7, 7') is allocated internal and external treads (8,8').

## Revendications

1. Chenille pour véhicule à chenille, constituée par un nombre de maillons de chaîne (1), chaque maillon (1)présentant le long d'un de ses bords longitudinaux des oeillets (2) de réception disposés à intervalle, et le long de l'autre bord longitudinal des encoches (3) alignées avec les oeillets (2) ainsi que des vides de prise (6) destinés à recevoir la dent (31) d'une roue d'entraînement de la chenille et des guidages latéraux (7, 7') guidant des galets de guidage du véhicule à chenille, les oeillets (2) du maillon de chaîne étant reliés dans les encoches (3) du maillon voisin dans des perçages articulées (4), et chaque maillon de chaîne, monobloc, comportant une embase (10), côté entraînement, et une semelle (20), côté sol, étant munie de profils en relief (21) se chevauchant lors de la réception des oeillets (2) d'un maillon (1) de chaîne dans les encoches (3) d'un maillon (21) voisin,
caractérisée en ce que
les profils en relief (21) s'étendant sur tous les oeillets (2) et les extrémités (20) des profils en relief (21) de maillons voisins au dessus des oeillets de réception (2), sont en biais et arrondis en direction de l'extrémité du profil en relief voisin.

2. Chenille selon la revendication 1, caractérisée en ce que pendant le guidage des maillons (1) sur la roue d'entraînement (30) les perçages (4) se déplacent sensiblement sur le cercle primitif (35') de la roue (30) d'entraînement.

3. Chenille selon la revendication 1, caractérisée en ce que le maillon (1) est en métal.

4. Chenille selon la revendication 1, caractérisée en ce que le maillon (1) est en matière plastique.

5. Chenille selon la revendication 1, caractérisée en ce que grâce à deux maillons (2) le long d'un de ses bords longitudinaux et deux encoches (3) le long de l'autre bord, les vides de prise sont situées entre les encoches (3).

6. Chenille selon la revendication 4, caractérisée en ce que le maillon (1) est muni de renforts internes nervurés dont l'épaisseur est égale à celle des profils à relief (21).

7. Chenille selon la revendication 1, caractérisée en ce que les guidages latéraux (7,7')sont associés à des surfaces de roulement, interne et externe (8,8').
